# EUROPÄISCHE PATENTANMELDUNG

(11) **EP 4 403 377 A1**
(43) Veröffentlichungstag der Anmeldung: **24.07.2024**
(21) Anmeldenummer: 24152336.4
(22) Anmeldetag: 17.01.2024
(51) Int. Cl.: B60B 3/14, B60B 7/06, B60B 7/02

(54) **ABDECKEINRICHTUNG FÜR EINEN ZENTRALVERSCHLUSS EINER FELGE EINES RADES**

(30) Priorität: 17.01.2023 DE 202023100223 U
(71) Anmelder: Kellner, Manuel, 74834 Elztal (DE)
(72) Erfinder: Kellner, Manuel, 74834 Elztal (DE)
(74) Vertreter: Gleim Petri Patent- und Rechtsanwaltspartnerschaft mbB

(57) **Zusammenfassung**

Die Erfindung betrifft eine Abdeckeinrichtung (10) für den Zentralverschluss der Felge eines Rades eines Fahrzeugs. Die Abdeckeinrichtung (10) weist eine Radialrichtung (R), eine Längsrichtung (L) und eine Umfangsrichtung (U) auf. Die Abdeckeinrichtung (10) weist einen zentralen zylindrischen Grundkörper (12) auf, der im an den Zentralverschluss angeschlossenen Zustand in einer zylindrischen Sacklochausnehmung des Zentralverschlusses angeordnet ist. An dem zentralen Grundkörper (12) ist oberseitig eine in Radialrichtung (R) nach außen verlaufende Flanschringscheibe (14) angeformt. Im Randbereich der Flanschringscheibe (14) ist eine in Längsrichtung (L) verlaufende, nach unten weisende, in Umfangsrichtung (U) umlaufende Stegringscheibe (16) angeordnet. Im unteren Randbereich der Stegringscheibe (16) ist eine in Radialrichtung (R) nach außen verlaufende weitere Flanschringscheibe (18) angeformt, die in Umfangsrichtung (U) verläuft. An dem zentralen Grundkörper (12) der Abdeckeinrichtung (10) ist eine in Längsrichtung (L) nach unten überstehende Schraubeinheit (20) mit Außengewinde vorhanden, die zum Anschluss an den Zentralverschluss in der Sacklochausnehmung des Zentralverschlusses eingeschraubt ist. Die Geometrie des zentralen Grundkörpers (12) mit Flanschringscheibe (14), Stegringscheibe (16) und weiterer Flanschringscheibe (18) ist dabei so ausgebildet, dass im an den Zentralverschluss angeschlossenen Zustand der Abdeckeinrichtung (10) die gesamte oberseitige Außenkontur des Zentralverschlusses in Umfangsrichtung (U) abgedeckt ist.

## Beschreibung

### TECHNISCHES GEBIET

Die vorliegende Erfindung betrifft eine Abdeckeinrichtung, auch Covereinrichtung genannt, für einen Zentralverschluss einer Felge eines Rades eines Fahrzeugs mit einer Radialrichtung, einer Längsrichtung und einer Umfangsrichtung, wobei der Zentralverschluss einen Anschlussgrundkörper aufweist mit einer zentralen in Längsrichtung nach oben offenen zylindrischen Ausnehmung, an die eine zylindrische in Radialrichtung umlaufende nach außen weisende Vorsprungeinheit anschließt mit einen außenseitig anschließenden sich in Radialrichtung erstreckenden umlaufenden Flansch, und der Anschlussgrundkörper eine zentrale Sacklochausnehmung mit Innengewinde aufweist.

### STAND DER TECHNIK

Üblicherweise werden die Räder eines Fahrzeugs mit 5 Radschrauben am Fahrzeug montiert. Insbesondere bei hochwertigen Sportwagenmodellen ist es bekannt, die Räder jeweils mittels eines Zentralverschlusses am Fahrzeug anzubringen. Der Zentralverschluss wird normalerweise im Motorsport angewendet, um die Räder während eines Rennens auf der Rennstrecke schneller wechseln zu können. Zum Unterstreichen des Motorsport-Feelings bei Sportwagen kann diese Verschlussvariante auch bei einem Fahrzeug verwendet werden, das üblicherweise im Straßenverkehr unterwegs ist.

Als nachteilig wird dabei empfunden, dass durch das Räder montieren und demontieren der Zentralverschluss abgenutzt wird. Die üblicherweise schwarze Eloxal-Beschichtung wird durch das Montagewerkzeug angegriffen und beschädigt. Dadurch wird die Optik negativ beeinflusst. Der beschädigte oder angegriffene Zentralverschluss stört das ästhetische Gesamtbild. Zudem passt der Zentralverschluss aufgrund seiner schwarzen Eloxal-Beschichtung häufig nicht zu aufwendig lackierten Felgen von Rädern.

### DARSTELLUNG DER ERFINDUNG

Ausgehend von dem genannten Stand der Technik liegt der vorliegenden Erfindung die Aufgabe beziehungsweise das technische Problem zugrunde, eine Abdeckeinrichtung, auch Covereinrichtung genannt, für einen Zentralverschluss einer Felge eines Rads anzugeben, der hohen ästhetischen Ansprüche genügt, optisch anpassungsfähig ist, so dass auch eine harmonische Optik bei sonderlackierten Felgen erzielt werden kann. Zudem soll die Abdeckeinrichtung wirtschaftlich herstellbar sein, einfach montierbar und demontierbar sowie den Zentralverschluss vor Umwelteinflüssen schützen.

Die erfindungsgemäße Abdeckeinrichtung ist durch die Merkmale des unabhängigen Anspruchs 1 gegeben. Vorteilhafte Ausgestaltungen und Weiterbildungen sind Gegenstand der vor dem unabhängigen Anspruch 1 direkt oder indirekt abhängigen Ansprüche.

Die erfindungsgemäße Abdeckeinrichtung zeichnet sich dadurch aus, demgemäß dadurch aus, dass die Abdeckeinrichtung einen zentralen zylindrischen Grundkörper aufweist, der im an den Zentralverschluss angeschlossenen Zustand in der zylindrischen Ausnehmung des Zentralverschlusses anordenbar ist, oberseitig an dem zentralen Grundkörper eine in Radialrichtung nach außen verlaufende Flanschringscheibe angeformt ist, im Randbereich der Flanschringscheibe eine in Längsrichtung verlaufende nach unten weisende im Umfangsrichtung umlaufende Stegringscheibe angeordnet ist, im unteren Randbereich der Stegringscheibe eine in Radialrichtung nach außen verlaufende weitere in Umfangsrichtung verlaufende Flanschringscheibe angeformt ist, an dem zentralen Grundkörper der Abdeckeinrichtung eine in Längsrichtung nach unten überstehende Schraubeinheit mit Außengewinde vorhanden ist, die zum Anschluss an den Zentralverschluss in die Sacklochausnehmung des Anschlussgrundkörpers des Zentralverschlusses einschraubbar ist und die Geometrie des zentralen Grundkörpers mit Flanschringscheibe, Stegringscheibe und weiterer Flanschringscheibe so ausgebildet ist, dass im an den Zentralverschluss angeschlossenen Zustand der Abdeckeinrichtung die gesamte oberseitige Außenkontur des Zentralverschluss in Umfangsrichtung deckbar ist.

Durch die erfindungsgemäße Abdeckeinrichtung ist es problemlos möglich, eine harmonische Optik zu erreichen, da der üblicherweise schwarzfarbige Zentralverschluss durch die Abdeckeinrichtung abgedeckt wird, die in der jeweils gewünschten Farbe lackiert sein kann. Dabei kann die Abdeckeinrichtung in den Farbton der Felge oder in anderen Farbtönen lackiert werden, je nach gewünschtem Gesamteindruck.

Zudem bietet die Abdeckeinrichtung den Vorteil das die auf dem Zentralverschluss mittels Sieb- oder Tampondruck aufgebrachten Wörter, die den Umgang mit dem Zentralverschluss zeigen soll, abgedeckt werden und von außen nicht sichtbar sind.

Die Abdeckeinrichtung kann problemlos individualisiert werden und zwar bereits beim Herstellvorgang. So können oberseitig auf der Abdeckeinrichtung eigene Logos aufgebracht werden. Auch eine Aufbringung von weiteren Applikationen beispielsweise aus Leder können aufgebracht werden.

Üblicherweise wird die Abdeckeinrichtung durch Drehen und Fräsen hergestellt. Dabei lassen sich individuelle Symbole, Logos, Wappen, Namen oder Ähnliches auf die Oberseite der Abdeckeinrichtung aufbringen.

Der Kunde muss die Abdeckeinrichtung beziehungsweise die Covereinrichtung nicht notwendigerweise beim Kauf des Fahrzeugs erwerben. Der Kunde hat die Möglichkeit auch nach dem Fahrzeugkauf, vor allem wenn durch die Rädermontage oder -demontage Beschädigungen des Zentralverschlusses auftauchen, eine Abdeckeinrichtung anzubringen und somit nachträglich Akzente zu setzen und gleichzeitig die Gebrauchsspuren optisch hochwertig zu kaschieren.

Eine besonders bevorzugte Ausgestaltung der erfindungsgemäßen Abdeckeinrichtung zeichnet sich dadurch aus, dass der zentrale Grundkörper der Abdeckeinrichtung in seiner Außenwandung umlaufende Dichtmittel, insbesondere einen Dichtungsring, aufweist. Durch diese Dichtmittel wird der Zentralverschluss vor Umwelteinflüssen und Verschmutzung geschützt.

Eine besonders vorteilhafte Ausgestaltung der erfindungsgemäßen Abdeckeinrichtung zeichnet sich dadurch aus, dass der zentrale Grundkörper in Umfangsrichtung in einem vorgegebenen Raster angeordnete in Längsrichtung nach unten offene Sacklochausnehmungen aufweist. Durch das Vorsehen der Sacklochausnehmungen wird das Gesamtgewicht der Abdeckeinrichtung vorteilhaft reduziert, wobei gleichzeitig die Formstabilität und Funktionalität herhalten bleibt.

Die Abdeckeinrichtung kann bevorzugt aus Kunststoff, Metall oder Nichtmetall, wie beispielsweise Aluminium, bestehen.

Eine optisch besonders ansprechende bevorzugte Ausgestaltung zeichnet sich dadurch aus, dass der zentrale Grundkörper der Abdeckeinrichtung und die Flanschringscheibe eine in Längsrichtung nach oben offene Vertiefung aufweisen, innerhalb derer eine Applikation mit individueller Optik, insbesondere Bild- oder Wortinformationen, eingebracht/appliziert werden kann.

Eine vorteilhafte Ausgestaltung, die hohen ästhetischen Ansprüchen genügt, zeichnet sich dadurch aus, dass die äußere Flanschringscheibe ein sich in Radialrichtung erweiternde Querschnittkontur aufweist.

Eine erhöhte Sicherheitsfunktion wird gemäß einer vorteilhaften Weiterbildung dadurch gewährleistet, dass am zentralen Grundkörper der Abdeckeinrichtung an ihrem Außenumfang zusätzlich eine lösbare Rasteinheit vorhanden ist, die im an den Zentralverschluss angeschlossenen Zustand der Abdeckeinrichtung mit entsprechenden Gegenrasteinheiten innerhalb der Ausnehmung des Zentralverschlusses lösbar in Eingriff bringbar ist, wobei die Rasteinheit in einer bevorzugten Ausgestaltung in Umfangsrichtung umlaufend ausgebildet ist.

Weitere Ausführungsformen und Vorteile der Erfindung ergeben sich durch die in den Ansprüchen ferner aufgeführten Merkmale sowie durch das nachstehend angegebene Ausführungsbeispiel. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im Folgenden anhand des in der Zeichnung dargestelltes Beispiels näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: Querschnitt durch ein Ausführungsbeispiel einer Abdeckeinrichtung für einen Zentralverschluss einer Felge eines Rades eines Fahrzeugs,

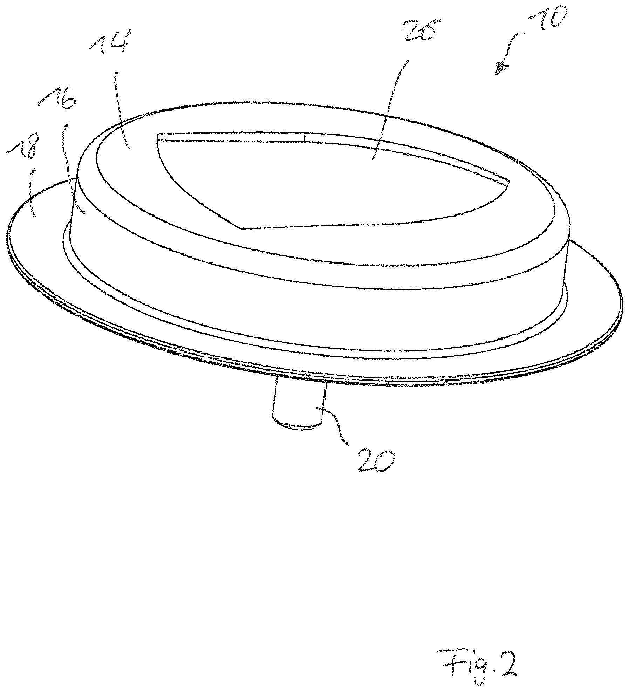

- Fig. 2: schematische Perspektivdarstellung der Abdeckeinrichtung gemäß Fig. 1 von oben gesehen,

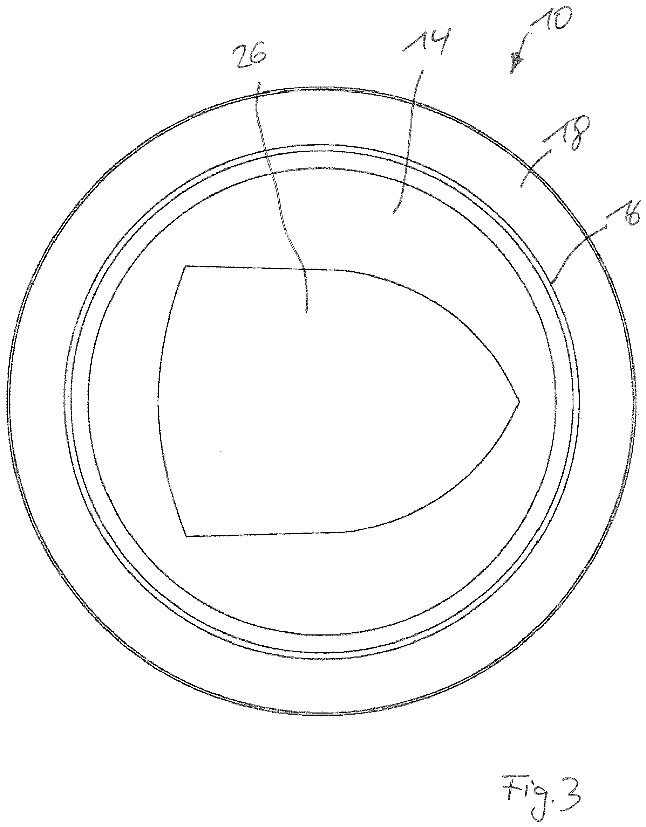

- Fig. 3: schematische Draufsicht auf die Abdeckeinrichtung gemäß Fig. 1,
- Fig. 4: Perspektivdarstellung der Abdeckeinrichtung von Fig. 1 von unten gesehen,
- Fig. 5: Untersicht der Abdeckeinrichtung gemäß Fig. 1 und
- Fig. 6: schematischer Querschnitt durch die Abdeckeinrichtung gemäß Fig. 1 an einen Zentralverschluss im geschlossenen Zustand.

### WEGE ZUM AUSFÜHREN DER ERFINDUNG

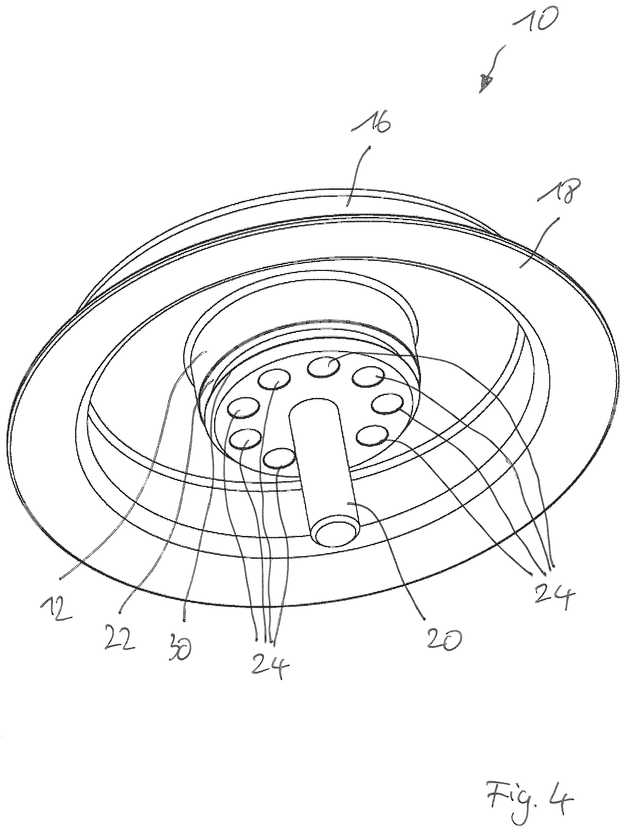

Das in den Figuren dargestellte Ausführungsbeispiel einer Abdeckeinrichtung 10 ist geeignet, einen Zentralverschluss 40 (siehe Fig. 4) einer Felge 50 eines Rades eines Fahrzeug auf dessen Oberseite abzudecken.

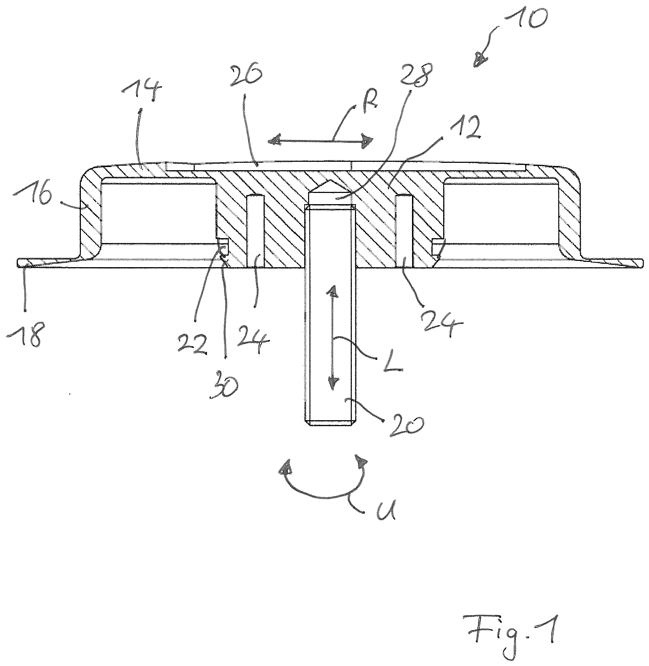

In der Fig. 1 ist die vertikale Längsrichtung mit dem Bezugszeichen L, die horizontale Radialrichtung mit dem Bezugszeichen R und die Umfangsrichtung mit dem Bezugszeichen U (jeweils als Doppelpfeile) dargestellt.

Die Abdeckeinrichtung 10 weist einen zentralen Grundkörper 12 auf, an den oberseitig in Radialrichtung R verlaufend eine Flanschringscheibe 14 angeformt ist. Im äußeren Endbereich der Flanschringscheibe 14 ist eine in Längsrichtung L nach unten verlaufende Stegringscheibe 16 angeformt.

Im unteren Endbereich der Stegringscheibe 16 ist eine in Radialrichtung R nach außen verlaufende weitere Flanschringscheibe 18 angeformt. Die weitere Flanschringscheibe 18 weist einen in Radialrichtung R nach außen linear zunehmenden Querschnittsverlauf auf.

Die Abdeckeinrichtung 10 ist rotationssymmetrisch zur zentralen Längsachse (Längsrichtung L) ausgebildet.

Unterseitig weist der zentrale Grundkörper 12 eine zentrale nach unten offene Gewindeausnehmung 28 auf, in die eine Schraubeinheit 20 mit Außengewinde eingeschraubt ist.

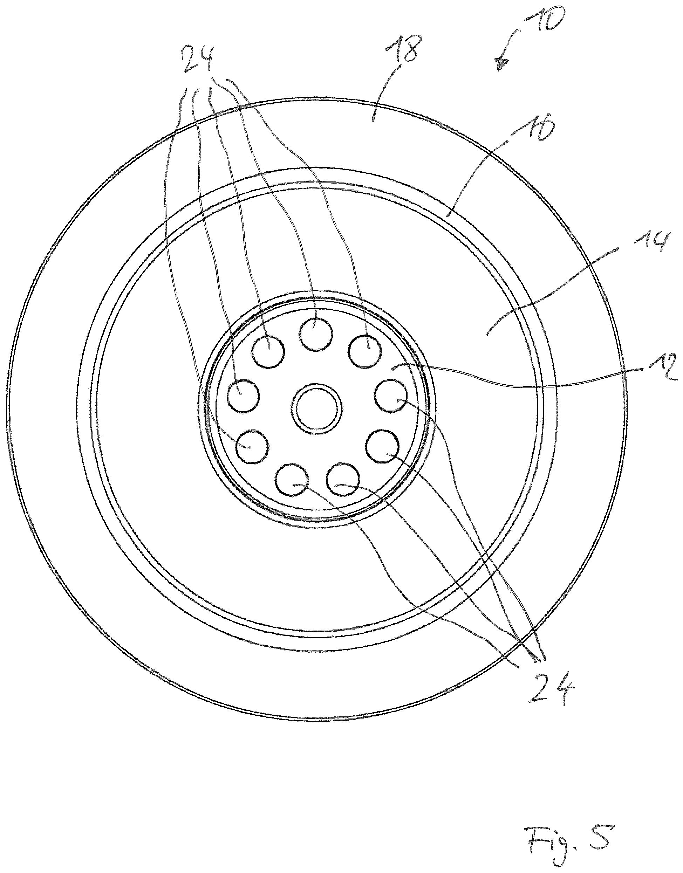

In Radialrichtung R beabstandet zur Gewindeausnehmung 28 sind nach unten offene Sacklochausnehmungen 24 in den zentralen Grundkörper 12 eingeformt, die in Umfangsrichtung U in einem vorgegebenen Rasterwinkelmaß vorhanden sind (siehe Fig. 4 und Fig. 5).

Im unteren Endbereich des zentralen Grundkörpers 12 ist eine umlaufende Rastnaseneinheit 30 vorhanden. Oberhalb der Rastnaseneinheit 30 ist in einer umlaufenden Nut ein Dichtungsring 22 angeordnet.

Auf der Oberseite weist die Abdeckeinrichtung 10 eine eingeprägte Vertiefung 26 auf.

Diese Vertiefung 26 ist für eine eingebrachte Applikation vorgesehen, die beispielsweise ein Logo, ein Wappen oder ein dergleichen individualisierendes Element sein kann.

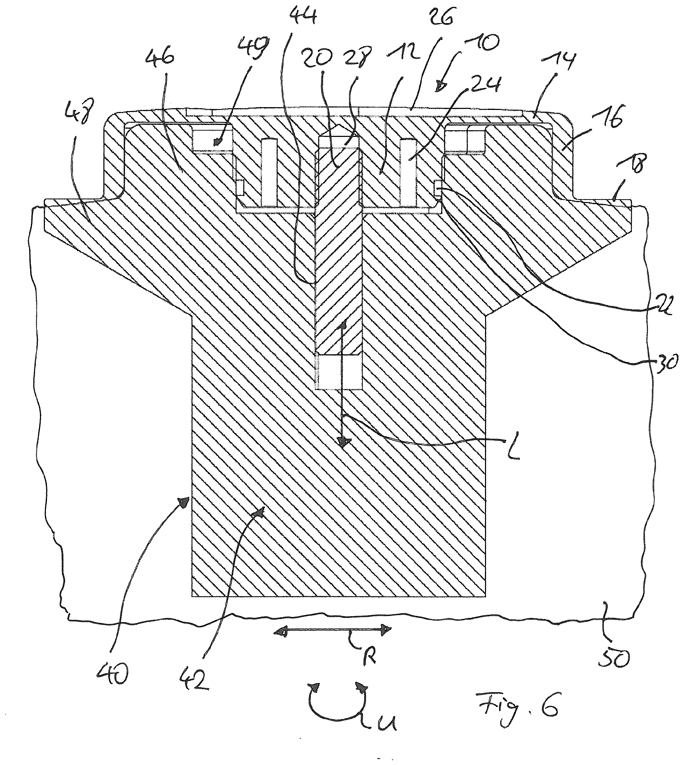

In Fig. 6 ist die Abdeckeinrichtung 10 im an den Zentralverschluss 40 angeschlossenen Zustand dargestellt.

Der Zentralverschluss 40, der an der Felge 50 angeschlossen ist, weist einen Anschlussgrundkörper 42 auf, an dessen Oberseite eine in Längsrichtung L verlaufende Vorsprungeinheit 46 angeformt ist, wobei unterhalb der Vorsprungeinheit 46 ein umlaufender, in Radialrichtung R nach außen weisender Flansch 48 angeformt ist.

Die Vorsprungeinheit 46 weist innenseitig in Umfangsrichtung U in einem vorgegebenen Rasterwinkelmaß angeordnete Formschlussausnehmungen 49 auf, in die ein Werkzeug formschlüssig eingesetzt werden kann, mittels dessen der Zentralverschluss 40 um die zentrale Drehachse (Längsrichtung L) zur Montage- beziehungsweise Demontagezwecken gedreht werden kann.

In dem Anschlussgrundkörper 42 des Zentralverschlusses 40 ist eine zentrale zylindrische, nach oben offene Ausnehmung 44 mit einem Innengewinde vorhanden, in die die Schraubeinheit 20 der Abdeckeinrichtung 10 eingeschraubt ist. Damit ist die Abdeckeinrichtung 10 an den Zentralverschluss 40 angeschlossen. Der zentrale Grundkörper 12 der Abdeckeinrichtung 10 ist innerhalb der Vorsprungeinheit 46 des Zentralverschlusses 40 angeordnet. Die Flanschringscheibe 14 deckt die Vorsprungeinheit 46 oberseitig ab. Die Stegringscheibe 16 deckt die Vorsprungeinheit 46 seitlich ab und die weitere Flanschringscheibe 18 deckt den Flansch 48 oberseitig ab. Damit ist der Zentralverschluss 40 bei angeschlossener Abdeckeinrichtung 10 vollständig abgedeckt.

Durch die Abdeckeinrichtung 10 kann im Bereich des Zentralverschlusses 40 eine harmonische Optik erreicht werden, die hohen ästhetischen Ansprüchen genügt. Der schwarze Zentralverschluss 40 wird vollständig abgedeckt, wobei die Oberseite der Abdeckeinrichtung 10 in jeder Farbe lackierbar ist und zusätzlich individualisierende Applikationen angebracht werden können.

## Patentansprüche

1. Abdeckeinrichtung (10), auch Covereinrichtung genannt, für einen Zentralverschluss (40) einer Felge (50) eines Rades eines Fahrzeugs mit einer Radialrichtung (R), einer Längsrichtung (L) und einer Umfangsrichtung (U), wobei der Zentralverschluss (40) einen Anschlussgrundkörper (42) aufweist mit einer zentralen in Längsrichtung (L) nach oben offenen zylindrischen Ausnehmung (44), an die eine zylindrische in Radialrichtung (R) umlaufende nach außen weisende Vorsprungeinheit (46) anschließt mit einen außenseitig anschließenden sich in Radialrichtung (R) erstreckenden umlaufenden Flansch (48), und der Anschlussgrundkörper (42) eine zentrale Sacklochausnehmung (50) mit Innengewinde aufweist,
- **dadurch gekennzeichnet, dass**
- die Abdeckeinrichtung (10) einen zentralen zylindrischen Grundkörper (12) aufweist, der im an den Zentralverschluss (40) angeschlossenen Zustand in der zylindrischen Ausnehmung (42) des Zentralverschlusses (40) anordenbar ist,
- oberseitig an dem zentralen Grundkörper (12) eine in Radialrichtung (R) nach außen verlaufende Flanschringscheibe (14) angeformt ist,
- im Randbereich der Flanschringscheibe (14) eine in Längsrichtung (L) verlaufende nach unten weisende im Umfangsrichtung (U) umlaufende Stegringscheibe (16) angeordnet ist,
- im unteren Randbereich der Stegringscheibe (16) eine in Radialrichtung (R) nach außen verlaufende weitere in Umfangsrichtung (U) verlaufende Flanschringscheibe (18) angeformt ist,
- an dem zentralen Grundkörper (12) der Abdeckeinrichtung (10) eine in Längsrichtung (L) nach unten überstehende Schraubeinheit (20) mit Außengewinde vorhanden ist, die zum Anschluss an den Zentralverschluss (40) in die Sacklochausnehmung (24) des Anschlussgrundkörpers (42) des Zentralverschlusses (40) einschraubbar ist und
- die Geometrie des zentralen Grundkörpers (12) mit Flanschringscheibe (14), Stegringscheibe (16) und weiterer Flanschringscheibe (18) so ausgebildet ist, dass im an den Zentralverschluss (40) angeschlossenen Zustand der Abdeckeinrichtung (10) die gesamte oberseitige Außenkontur des Zentralverschluss (40) in Umfangsrichtung (U) deckbar ist.

2. Abdeckeinrichtung nach Anspruch 1,
- **dadurch gekennzeichnet, dass**
- der zentrale Grundkörper (12) der Abdeckeinrichtung (10) in seiner Außenwandung umlaufende Dichtmittel, insbesondere einen Dichtungsring (22), aufweist.

3. Abdeckeinrichtung nach Anspruch 1 oder 2,
- **dadurch gekennzeichnet, dass**
- der zentrale Grundkörper (12) in Umfangsrichtung (U) in einem vorgegebenen Raster angeordnete in Längsrichtung (L) nach unten offene Sacklochausnehmungen (24) aufweist.

4. Abdeckeinrichtung nach einem oder mehreren der vorstehenden Ansprüche,
- **dadurch gekennzeichnet, dass**
- die Abdeckeinrichtung (10) aus Kunststoff, Metall oder Nichtmetall, wie beispielsweise Aluminium, besteht.

5. Abdeckeinrichtung nach einem oder mehreren der vorstehenden Ansprüche,
- **dadurch gekennzeichnet, dass**
- der zentrale Grundkörper (12) der Abdeckeinrichtung (10) und die Flanschringscheibe (14) eine in Längsrichtung (L) nach oben offene Vertiefung (26) aufweisen, innerhalb derer eine Applikation mit individueller Optik, insbesondere Bild-oder Wortinformationen, eingebracht/appliziert werden kann.

6. Abdeckeinrichtung nach einem oder mehreren der vorstehenden Ansprüche,
- **dadurch gekennzeichnet, dass**
- die äußere Flanschringscheibe (18) ein sich in Radialrichtung (R) erweiternde Querschnittkontur aufweist.

7. Abdeckeinrichtung nach einem oder mehreren der vorstehenden Ansprüche,
- **dadurch gekennzeichnet, dass**
- am zentralen Grundkörper (12) der Abdeckeinrichtung (10) an ihrem Außenumfang zusätzlich eine lösbare Rasteinheit vorhanden ist, die im an den Zentralverschluss (40) angeschlossenen Zustand der Abdeckeinrichtung (10) mit entsprechenden Gegenrasteinheiten innerhalb der Ausnehmung (44) des Zentralverschlusses (40) lösbar in Eingriff bringbar ist.

8. Abdeckeinrichtung nach Anspruch 7,
- **dadurch gekennzeichnet, dass**
- die Rasteinheit in Umfangsrichtung (U) umlaufend ausgebildet ist.
